# EUROPÄISCHE PATENTSCHRIFT

(11) **EP 1 934 504 B1**
(45) Veröffentlichungstag und Bekanntmachung des Hinweises auf die Patenterteilung: **28.10.2009**
(21) Anmeldenummer: 06792274.0
(22) Anmeldetag: 26.09.2006
(51) Int. Cl.: F16H 61/04, F16H 63/50, B60W 10/06, B60W 10/10, B60W 10/02, B60W 30/18

(54) **VERFAHREN UND VORRICHTUNG ZUR STEUERUNG EINES GANGWECHSELS EINES AUTOMATISIERTEN SCHALTGETRIEBES**
PROCESS AND DEVICE FOR CONTROLLING A GEAR SHIFT OF AN AUTOMATIC GEAR BOX
PROCEDE ET DISPOSITIF PERMETTANT DE COMMANDER UN CHANGEMENT DE RAPPORT D'UNE BOITE DE VITESSES AUTOMATIQUE

(30) Priorität: 14.10.2005 DE 102005049178
(43) Veröffentlichungstag der Anmeldung: 25.06.2008
(73) Patentinhaber: ZF Friedrichshafen AG, 88038 Friedrichshafen (DE)
(72) Erfinder: HEINZELMANN, Karl-Fritz, 88074 Meckenbeuren (DE); DOEBELE, Bernd, 88682 Salem (DE)
(86) Internationale Anmeldenummer: PCT/EP2006/009330
(87) Internationale Veröffentlichungsnummer: WO 2007/042141

(56) Entgegenhaltungen:
- EP-A- 1 439 087
- EP-A- 1 517 066
- DE-A1- 10 135 327
- DE-A1- 10 150 314
- DE-A1- 19 735 759

## Beschreibung

Die Erfindung betrifft ein Verfahren zur Steuerung eines Gangwechsels eines automatisierten Schaltgetriebes gemäß dem Oberbegriff des Patentanspruchs 1, und wie es in der DE19735327A1 beschrieben ist.

Automatisierte Schaltgetriebe werden seit geraumer Zeit in unterschiedlichen Kraftfahrzeugtypen genutzt. Während der Fahrer bei manuell zu schaltenden Getrieben bei Schaltvorgängen mehrere Verrichtungen zeitlich koordiniert und situationsangemessen durchzuführen hat, entlasten automatisierte Schaltgetriebe den Fahrer von diesen Tätigkeiten und erlauben ihm so eine bessere Konzentration auf das Verkehrsgeschehen.

Allerdings kann ein erfahrener Fahrzeuglenker über die zeitliche Gestaltung der Auslenkung des Fahrkupplungspedals und des Fahrpedals, den Zeitpunkt und die Geschwindigkeit der Betätigung des Gangwahlhebels und die dabei auf den Gangwahlhebel ausgeübte Kraft den Vorgang des Gangwechsels auf vielfache Art und Weise gestalten und entsprechend seiner jeweiligen Intention optimieren. Wünscht er beispielsweise einen besonders komfortablen und ruckfreien Gangwechsel, so wird er das Pedal der Fahrkupplung relativ langsam betätigen, nachdem er zuvor die Auslenkung des Fahrpedals gefühlvoll reduziert hat. Den Schalthebel wird er in diesem Fall erst nach einer kleinen Pause nach Trennung der Fahrkupplung betätigen und dabei allzu schnelle Schaltbewegungen oder den Einsatz großer Betätigungskräfte vermeiden. Herkömmliche Steuerungen automatisierter Schaltgetriebe orientieren sich oft an einem derartigen Schaltablauf, um den Fahrzeuginsassen einen hohen Schaltund Fahrkomfort zu gewähren und darüber hinaus möglichst verschleißarm zu schalten.

Diese Schaltstrategie hat jedoch den Nachteil, dass während des Schaltvorganges eine vergleichsweise lang andauernde Zugkraftunterbrechung eintritt. Insbesondere bei gewünschten hohen Zugkräften, etwa bei Anhängerbetrieb an Steigungen oder auch im Normalbetrieb an Rampen und anderen starken Steigungen kann dies dazu führen, dass das Fahrzeug während dieser Zugkraftunterbrechung so viel Geschwindigkeit verliert, dass der ursprünglich ausgewählte Gang nicht mehr schaltbar ist oder jedenfalls nicht mehr der optimale Gang ist. Zudem macht sich die Zugkraftunterbrechung auch bei gewünschten hohen Beschleunigungsleistungen des Fahrzeugs negativ bemerkbar. In jedem Fall verschlechtert eine derartige Schaltstrategie die möglichen Fahrleistungen eines Fahrzeugs im Vergleich zu einem Fahrzeug mit manuell zu betätigendem Getriebe und einem Fahrer, der schnell und präzise schaltet. Dies hat nicht zuletzt zu den bekannten Akzeptanzproblemen von automatisierten Schaltgetrieben bei einigen sportlich orientierten Fahrern beigetragen.

Aus der DE 101 32 738 A1 ist ein Verfahren zur Steuerung des Gangauslegens bei einem automatisierten Stufengetriebe bekannt, bei welchem bei einem Gangwechsel das Drehmoment des Antriebsmotors reduziert wird. In Abhängigkeit von der momentanen Beschleunigung des Fahrzeugs wird bei Erreichen eines ersten Beschleunigungsgrenzwertes die Fahrkupplung geöffnet und bei Erreichen eines zweiten Beschleunigungsgrenzwertes der Gang ausgelegt. Der erste und zweite Beschleunigungsgrenzwert werden dabei unabhängig von einander und in Abhängigkeit von der anfänglichen Beschleunigung des Fahrzeugs, dem aktuell eingelegten Gang und der Einspritzmenge des Motors gewählt beziehungsweise ausgelesen.

Sofern zunächst der erste Grenzwert erreicht wird, wird nach Abgabe eines Signals zum Öffnen der Fahrkupplung direkt ein Signal zum Auslegen des Ganges abgegeben. Sofern der zweite Grenzwert eine höheren absoluten Wert als der erste Grenzwert aufweist und daher bei einem Abfall der Beschleunigung des Fahrzeugs zunächst der zweite Grenzwert erreicht wird, erfolgt die Abgabe des Signals zum Auslegen des Ganges zu diesem Zeitpunkt, während das Signal zum Öffnen der Fahrkupplung erst zu einem späteren Zeitpunkt, nämlich bei Erreichen des ersten Beschleunigungsgrenzwertes erfolgt.

Das bekante Verfahren basiert dabei auf der Überlegung, dass ein Auslegen des Ganges unabhängig von der Stellung der Fahrkupplung bereits dann möglich ist, wenn eine relativ geringe Betätigungskraft hierfür ausreicht. Dem Ausführungsbeispiel ist zu entnehmen, dass zu diesem Zeitpunkt die Menge des in den Antriebsmotor eingespritzten Kraftstoffes längst auf Null reduziert ist und daher die noch anliegende Beschleunigung des Fahrzeugs im Wesentlichen nur noch auf Massenträgheit und elastischer Verformung von Elementen des Antriebsstranges und daraus resultierenden Momenten an der Eingangsseite des Getriebes zurückzuführen ist. Eine nennenswerte Beschleunigung des Getriebes durch das frühzeitige Auslegen des Ganges ist daher einerseits unwahrscheinlich und andererseits jedenfalls nicht intendiert.

Die DE 101 32 738 A1 bietet damit einen wertvollen Lösungsansatz zur Verringerung der Zugkraftunterbrechung bei automatisierten Stufengetrieben in Bezug auf das Auslegen eines Ganges, basiert jedoch einerseits auf der ständigen Ermittlung und Bewertung der Fahrzeugbeschleunigung und beschäftigt sich andererseits in keiner Weise mit dem Problem eines möglichst schnellen und effektiven Einlegens eines gewählten Zielganges.

Vor diesem Hintergrund liegt der Erfindung die Aufgabe zugrunde, ein Steuerungsverfahren für ein automatisiertes Schaltgetriebe vorzustellen, welches einen Gangwechsel und insbesondere ein Rückschalten bei minimaler Zugkraftunterbrechung ermöglicht.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich die Zugkraftunterbrechung bei einem Schaltvorgang deutlich verkürzen lässt, wenn es gelingt, die Phase der Reduzierung des Antriebsmomentes des Antriebsmotors, die Phase der Trennung des Kraftschlusses im automatisierten Schaltgetriebe und die Phase der Drehzahlanpassung der Getriebeeingangswelle auf eine geeignete Zieldrehzahl derart auszugestalten, dass sie sich zumindest teilweise zeitlich überlappen.

Die Erfindung geht aus von einem Verfahren zur Steuerung eines Gangwechsels eines automatisierten Schaltgetriebes mit einem auf eine Eingangswelle des automatisierten Schaltgetriebes wirkenden Antriebsmotor und einer trieblich zwischen dem Antriebsmotor und dem automatisierten Schaltgetriebe angeordneten Fahrkupplung, welche sich durch einen Kupplungssteller wahlweise öffnen oder schließen lässt. Sie geht weiter von einer Steuerungsvorrichtung zur Koordination des Betriebs von automatisiertem Schaltgetriebe, Antriebsmotor und Fahrkupplung aus.

Die Fahrkupplung ist dabei in der Regel eine reibschlüssige, automatisiert zu schaltende Kupplung, welche neben einem vollständig geöffneten Zustand mit zumindest nahezu keiner Momentenübertragung zwischen der Eingangsseite und der Ausgangsseite der Kupplung und einem vollständig geschlossenen Zustand mit einer zumindest nahezu schlupflosen Momentenübertragung zwischen der Eingangsseite und der Ausgangsseite der Kupplung auch einen Bereich aufweist, in welchem die Kupplung mit Schlupf arbeitet und nur einen Teil des an der Eingangsseite anliegenden Momentes an die Ausgangsseite der Kupplung weiterleitet.
Im Rahmen der Beschreibung der Erfindung ist der genaue Einbauort der Fahrkupplung unerheblich, solange die Fahrkupplung zwischen der Ausgangswelle des Antriebsmotors und der Eingangswelle des automatisierten Schaltgetriebes wirksam ist. Im Einzelfall kann die Fahrkupplung auch in das Getriebegehäuse baulich integriert sein. Weiter ist es unerheblich, ob an Stelle der vorstehend beschriebenen Fahrkupplung eine Mehrzahl von Fahrkupplungen tritt, solange zumindest eine oder auch mehrere Fahrkupplungen in Kombination die vorstehende Funktion zu erfüllen in der Lage sind.

Die Koordination des Betriebs von automatisiertem Schaltgetriebe, Antriebsmotor und Fahrkupplung durch die Steuerungsvorrichtung schießt die indirekte Beeinflussung mit ein. Beispielsweise kann die Steuerungsvorrichtung ein direktes Signal an eine Kraftstoffeinspritzpumpe abgeben, um das Antriebsmoment des Antriebsmotors zu reduzieren. In der Regel ist es jedoch sinnvoll, wenn die Steuerungsvorrichtung ein Signal an eine Motorsteuerungseinrichtung abgibt, wodurch eine dort angesiedelte Vorrichtung zur Steuerung der Kraftstoffeinspritzmenge entsprechend beeinflusst wird. Schließlich kann die Steuerungsvorrichtung auch ein Signal an zwischengeschaltete Vorrichtungen abgeben, welches diese veranlasst, ihrerseits Signale abzugeben, welche letztlich den gewünschten Zweck erreichen. In den meisten Fällen wird die Koordination sowohl in einem Auslesen von Daten als auch in einem Absenden beeinflussender Daten an alle drei Komponenten bestehen. Es ist jedoch auch denkbar, das Verhalten zumindest einer Komponente aus Daten anderer Komponenten zu schließen und daher nicht von allen Komponenten Daten abzufragen. Ebenso kann zumindest eine Komponente als unabhängige Führungsgröße gewählt werden, so dass diese selbst nicht von der Steuerungseinrichtung beeinflusst wird.

Zur Lösung der gestellten Aufgabe ist ein Verfahren mit den Verfahrensschritten des Anspruchs 1 vorgesehen.

Unter einem Gangwechsel wird hierbei explizit nicht ein bloßes Auslegen eines ersten Ganges verstanden, dem dann zeitlich versetzt oder mit beliebigem zeitlichen Abstand ein Einlegen eines neuen Ganges folgt, wobei der Antriebsmotor bei zumindest teilweise geschlossener Fahrkupplung zur Synchronisation der Drehzahl der Eingangswelle des Schaltgetriebes dient. Ein derartiges Vorgehen ist durch eine Absenkung der Drehzahl des Antriebsmotors auf ein niedriges Niveau, zumeist im Bereich der Leerlaufdrehzahl, und eine nachfolgende Anhebung der Drehzahl des Antriebsmotors zwecks Erreichens einer Synchrondrehzahl der Getriebeeingangswelle gekennzeichnet. Damit lassen sich eindeutig eine Phase des Gangauslegens und eine zeitlich und inhaltlich strikt abgegrenzte Phase des Einlegens eines Ganges aus der Neutralstellung des Getriebes heraus abgrenzen.

Derartige Schaltungsabläufe sind in Form einer so genannten Schaltung mit Zwischengas hinlänglich bekannt und zeichnen sich gerade durch lange Zugkraftunterbrechungen aus. Unter einem Gangwechsel wird hier dagegen das Auslegen eines Ganges und das nachfolgende Einlegen eines neuen Ganges verstanden, wobei bereits die Vorgänge beim Auslegen des Ganges darauf gerichtet sind, das Einlegen des neuen Ganges vorzubereiten und so die Zugkraftunterbrechung zu minimieren.

Wie noch im Folgenden genauer ausgeführt wird, kann es sich bei dem durch den Antriebsmotor über die Fahrkupplung auf die Getriebeeingangswelle aufgebrachten Moment sowohl um ein positives als auch um ein negatives Antriebsmoment handeln, welches sich dadurch auszeichnet, dass es über eine im Schlupfbetrieb befindliche Fahrkupplung in der Art auf die Eingangswelle des automatisierten Schaltgetriebes einwirkt, dass sich deren Drehzahl in Richtung auf die Zieldrehzahl verändert, welche sich bei eingelegtem Zielgang und vollständig geschlossener Fahrkupplung bei der gegebenen Fahrzeuggeschwindigkeit einstellen würde.

In einer bevorzugten Ausführungsform der Erfindung koordiniert die Steuerungsvorrichtung bei Rückschaltvorgängen die Reduzierung des Antriebsmomentes des Antriebsmotors, die Reduzierung des Fahrkupplungsmomentes und die Trennung des Kraftschlusses im automatisierten Schaltgetriebe in der Art, dass der Antriebsmotor über die Fahrkupplung bei getrenntem Kraftschluss im automatisierten Schaltgetriebe ein positives Antriebsmoment an die Eingangswelle des automatisierten Schaltgetriebes überträgt, welches dazu beiträgt, die Eingangswelle des automatisierten Schaltgetriebes auf eine Zieldrehzahl eines einzulegenden Zielganges zu beschleunigen. Dies geschieht insbesondere durch eine sich zeitlich überschneidende Reduzierung des Antriebsmomentes des Antriebsmotors und eine teilweise Öffnung der Fahrkupplung bei bereits wirksamer Trennung des Kraftschlusses im Getriebe durch Auslegen des Ausgangsganges.

Dies führt dazu, dass im Vergleich zu herkömmlichen Getriebesteuerungen der bisherige Gang (Ausgangsgang) früher ausgelegt werden kann, da nicht erst eine vollständige oder weitgehende Momentenfreiheit der Getriebeeingangswelle abgewartet zu werden braucht. Der Ausgangsgang wird bereits ausgelegt, wenn das vom Antriebsmotor auf die Eingangswelle des Getriebes wirkende Moment unter einen Grenzwert fällt, wobei dieses Abfallen des auf die Eingangswelle des Getriebes wirkenden Momentes grundsätzlich sowohl durch eine Verringerung des Antriebsmomentes des Antriebsmotors als auch durch eine teilweise Öffnung der Fahrkupplung bewirkt werden kann.
Besonders vorteilhaft ist es jedoch, wenn die Steuerungsvorrichtung die Reduzierung des Antriebsmomentes des Antriebsmotors und die Reduzierung des Fahrkupplungsmomentes in der Art koordiniert, dass beide Momente zeitlich überschneidend reduziert werden. Dies hat zur Folge, dass zu einem Zeitpunkt, zu dem der Antriebsmotor einen positiven Momentenbeitrag liefert, ein Teil dieses Momentenbeitrages über die sich im Schupfbetrieb befindliche Fahrkupplung auf die Eingangswelle des sich zu diesem Zeitpunkt im Leerlauf befindlichen bzw. in den Leerlauf schaltenden automatisierten Schaltgetriebes übertragen wird, wodurch diese in Richtung der Zieldrehzahl beschleunigt wird.

Hierdurch wird erstens der Antriebsmotor durch die Momentenabgabe an das automatisierte Schaltgetriebe und über die im Schlupfbetrieb der Fahrkupplung in Wärme umgewandelte Energie abgebremst, beziehungsweise es wird einem unerwünscht starken Anstieg der Drehzahl des Antriebsmotors entgegengewirkt, die sich andernfalls bei Öffnung der Fahrkupplung z.B. durch eine zeitliche Verzögerung zwischen der Abgabe eines Befehls zur Reduzierung der Einspritzmenge und dem Wirksamwerden des Befehls ergeben würde.

Zweitens kann das Öffnen der Fahrkupplung zu einem im Vergleich zu herkömmlichen Steuerungen früheren Zeitpunkt ausgelöst werden, da nicht erst eine weitgehende Reduzierung des Antriebsmomentes des Antriebsmotors abgewartet zu werden braucht.

Drittens kann auf diese Weise die Drehzahl der Getriebeeingangswelle besonders schnell in Richtung zur Zieldrehzahl beeinflusst werden. In bestimmten Fällen kann zudem auf eine Synchronisation durch getriebeeigene Elemente verzichtet werden, da für ein Gangeinlegen lediglich zu einem geeigneten Zeitpunkt ein entsprechender Befehl abgegeben zu werden braucht.

Der geeignete Zeitpunkt kann dabei ein Zeitpunkt sein, zu dem die Drehzahldifferenz zwischen der momentanen Getriebeeingangsdrehzahl und der Getriebeeingangsdrehzahl, die sich bei eingelegtem Zielgang ergibt, unterhalb einer vorbestimmten Schwelle liegt. Er kann jedoch auch unter Berücksichtigung der Totzeit zwischen der Abgabe eines Befehls zum Einlegen eines Ganges und dem tatsächlichen Einlegen des Ganges so früh gewählt werden, dass unter Berücksichtigung der Totzeit und der prognostizierten Veränderung der Drehzahl der Getriebeeingangswelle über diese Totzeit gerade die zuvor genannte vorbestimmte Schwelle erreicht beziehungsweise unterschritten wird.

Schließlich bietet das erfindungsgemäße Verfahren den Vorteil, dass die Drehzahl des Antriebsmotors bei einem Gangwechsel nicht bis in den Bereich der Leerlaufdrehzahl abgesenkt zu werden braucht, sondern im Gegenteil während des Schaltvorganges eine Beschleunigung der Drehzahl des Antriebsmotors bewirkt werden kann, die nach Einlegen des Zielganges die Zeitspanne bis zur möglichen Bereitstellung des maximal leistbaren Motormomentes deutlich verkürzt.

Wenn dagegen die Steuerungsvorrichtung bei Hochschaltvorgängen die Reduzierung des Antriebsmomentes des Antriebsmotors, die Reduzierung des Fahrkupplungsmomentes und die Trennung des Kraftschlusses im automatisierten Schaltgetriebe in der Art koordiniert, dass der Antriebsmotor über die Fahrkupplung bei getrenntem Kraftschluss im automatisierten Schaltgetriebe ein negatives Antriebsmoment an die Eingangswelle des automatisierten Schaltgetriebes überträgt, welches dazu beiträgt, die Eingangswelle des automatisierten Schaltgetriebes auf eine Zieldrehzahl eines einzulegenden Ganges abzubremsen, so kann die Zugkraftunterbrechung auch bei Hochschaltvorgängen reduziert und die möglichen Fahrleistungen damit verbessert werden. Dabei gilt im Wesentlichen das vorstehend Ausgeführte entsprechend, wobei jedoch zu beachten ist, dass hierbei einer schnellen Absenkung des vom Antriebsmotor an der Eingangsseite der Fahrkupplung aufgebrachten Momentes eine entscheidende Bedeutung zukommt.

Um diese schnelle Absenkung des Momentes des Antriebsmotors zu unterstützen, ist es beispielsweise denkbar, die Fahrkupplung in einen Zustand zu versetzen, in dem besonders viel Energie durch Reibung in Wärme umgesetzt wird. Daneben ist es auch möglich, bestimmte Verbraucher wie beispielsweise Lichtmaschinen, Klimaanlagen, Retarder oder auch speziell zu diesem Zweck vorgesehene Bremsen oder andere Elemente in der Art anzusteuern, dass sie ein gewünschtes Bremsmoment auf die Ausgangswelle des Antriebsmotors ausüben.

Auch für Hochschaltvorgänge ist es aus den bereits vorstehend erläuterten Gründen besonders vorteilhaft, wenn die Steuerungsvorrichtung die Reduzierung des Antriebsmomentes des Antriebsmotors und die Reduzierung des Fahrkupplungsmomentes in der Art koordiniert, dass beide Momente zeitlich überschneidend reduziert werden.

Sofern das automatisierte Schaltgetriebe ein Klauenkupplungsgetriebe in dem Sinne ist, dass zumindest ein Gang mittels einer Klauenkupplung geschaltet werden kann, ist es darüber hinaus von Vorteil, wenn die Steuerungsvorrichtung ein Signal zur Einlegung eines Zielganges abgibt, sobald die Getriebeeingangsdrehzahl einen schaltfähigen Abstand zur Zieldrehzahl aufweist.

Da sich die Fahrkupplung zu diesem Zeitpunkt im Schlupfbetrieb befindet und die Drehzahl des Antriebsmotors sich aufgrund der vorstehend erläuterten Aspekte des Verfahrens bereits relativ nahe an der Zieldrehzahl befindet, kann in diesem Fall der schaltfähige Abstand im Vergleich zu herkömmlichen Verfahren bei vergleichbarer Belastung von Elementen des Antriebsstranges und vergleichbaren Auswirkungen auf den Fahrkomfort durch einen möglichen Schaltruck deutlich vergrößert werden. Alternativ ist ein besonders komfortables und materialschonendes Schalten bei mit dem Stand der Technik vergleichbarem schaltfähigem Abstand möglich.

Wenn das automatisierte Schaltgetriebe ein Getriebe mit Zwangssynchronisation in dem Sinne ist, dass zumindest ein Gang mittels einer Zwangssynchronisation geschaltet werden kann, und die Steuerungsvorrichtung ein Signal zur Einlegung eines Zielganges abgibt, sobald eine Trennung des Kraftschlusses im automatisierten Schaltgetriebe abgeschlossen ist, kann auf eine Abfrage zur Unterschreitung einer maximalen Drehzahlabweichung zwischen der momentanen Eingangsdrehzahl des automatisierten Schaltgetriebes und der sich bei eingelegtem Zielgang ergebenden Eingangsdrehzahl des automatisierten Schaltgetriebes verzichtet werden. Das Verfahren gemäß der Erfindung bietet jedoch auch hier einen entscheidenden Vorteil, indem es sicherstellt, dass die Drehzahlabweichung im Vergleich zum Stand der Technik klein ist und so die Elemente zur Zwangssynchronisation weitgehend geschont werden und gegebenenfalls kleiner und preiswerter ausgeführt werden können.

Im Folgenden soll eine Vorrichtung zur Durchführung des erfindungsgemäßen Verfahrens vorgestellt werden, welche nicht zum Inhalt der Erfindung gehört:

Die Vorrichtung zur Steuerung eines Gangwechsels eines automatisierten Schaltgetriebes mit einem auf eine Eingangswelle des automatisierten Schaltgetriebes wirkenden Antriebsmotor und einer trieblich zwischen dem Antriebsmotor und dem automatisierten Schaltgetriebe angeordneten Fahrkupplung, welche sich durch einen Kupplungssteller wahlweise öffnen oder schließen lässt, zeichnet sich dadurch aus, dass die Steuerungsvorrichtung zur Koordination von automatisiertem Schaltgetriebe, Antriebsmotor und Fahrkupplung vorgesehen und so ausgebildet ist, dass diese bei einem Gangwechsel eine Reduzierung des Antriebsmomentes des Antriebsmotors, eine Reduzierung des Fahrkupplungsmomentes und eine Trennung des Kraftschlusses im automatisierten Schaltgetriebe in der Art koordinieren kann, dass der Antriebsmotor über die Fahrkupplung bei getrenntem Kraftschluss im automatisierten Schaltgetriebe ein Antriebsmoment an die Eingangswelle des automatisierten Schaltgetriebes überträgt.

Die Steuerungsvorrichtung zur Koordination von automatisierten Schaltgetriebe, Antriebsmotor und Fahrkupplung kann dabei baulich aus einer Einheit bestehen oder verschiedene, miteinander in Verbindung stehenden Unterenheiten umfassen, welche separat oder als integrale Bestandteile anderer Einheiten ausgebildet sein können.

Wenn die Steuerungsvorrichtung die Reduzierung des Antriebsmomentes des Antriebsmotors und die Reduzierung des Fahrkupplungsmomentes in der Art zu koordinieren in der Lage ist, dass beide Momente zeitlich überschneidend reduziert werden, können sämtliche vorstehend beschriebenen Vorteile des erfindungsgemäßen Verfahrens umgesetzt werden.

Dabei ist es in Hinblick auf den Aufwand und die Kosten der notwendigen Verkabelung besonders vorteilhaft, wenn die Steuerungsvorrichtung zur Koordination der Reduzierung des Antriebsmomentes des Antriebsmotors, zur Reduzierung des Fahrkupplungsmomentes, zur Trennung des Kraftschlusses im automatisierten Schaltgetriebe und zur Auslösung eines Einlegens eines Zielganges mit zumindest denjenigen Steuergeräten über einen so genannten elektronischen Fahrzeugdatenbus datentechnisch verbunden ist, von denen es kein integraler Bestandteil ist. Auf diese Weise stehen sämtliche Daten bei Bedarf auch anderen Steuergeräten zur Verfügung und gegebenenfalls bereits vorhandene Busverbindungen können ohne oder mit minimalem zusätzlichem Hardwareaufwand mit genutzt werden.

Das erfindungsgemäße Verfahren lässt sich anhand eines Ausführungsbeispiels weiter erläutern. Dazu ist der Beschreibung eine Zeichnungsfigur beigefügt. Diese zeigt für ein Getriebe mit Klauenschaltung einen beispielhaften zeitlichen Verlauf der Soll-Einspritzmenge me_soll, der Drehzahl der Ausgangswelle des Antriebsmotors n_mot und der Drehzahl der Eingangswelle des automatisierten Schaltgetriebes n_ge. Weiter sind der Kupplungsweg und der Schaltweg des automatisierten Schaltgetriebes über die Zeit t aufgetragen.

Da es für das erfindungsgemäße Verfahren unerheblich ist, ob die Steuerungsvorrichtung jeweils direkt auf die beteiligte Elemente und Module einwirkt oder lediglich in dem Sinne koordinierend eingreift, in dem diese anderen Steuerungsgeräten zur Durchführung des Verfahrens notwendige Informationen übermittelt oder bereitstellt, wird nachfolgend in erster Linie das tatsächliche Geschehen auf der Komponentenebene beispielhaft dargestellt.

Zum Zeitpunkt t₀ befindet sich das Fahrzeug bei eingelegtem Gang im quasistatischen Fahrbetrieb. Die Soll-Einspritzmenge me_soll, die im Wesentlichen das Antriebsmoment des Antriebsmotors bestimmt und hier synonym mit dem Antriebsmoment verwendet werden soll, ist nahezu konstant und die Fahrkupplung ist vollständig geschlossen, weshalb die Drehzahl des Antriebsmotors n_mot und die Drehzahl der Eingangswelle des automatisierten Schaltgetriebes n_ge identisch sind.

Zu diesem Zeitpunkt t₀ wird ein Signal zur Einleitung eines Gangwechsels gegeben, woraufhin der Kupplungsweg von der bisherigen, vollständig geschlossenen Position zunächst mit hoher Geschwindigkeit und ab Erreichen des Schlupfbereiches der Fahrkupplung mit geringerer Geschwindigkeit in Richtung einer zunehmenden Öffnung der Fahrkupplung verstellt wird. Die Drehzahl der Eingangswelle des Getriebes n_ge ist aufgrund des noch eingelegten Ganges an die Fahrgeschwindigkeit des Fahrzeugs gebunden und bleibt daher weitestgehend konstant.

Mit Erreichen des Schlupfbereiches der Fahrkupplung kann das Moment des Antriebsmotors jedoch nur noch teilweise an das automatisierte Schaltgetriebe weitergeleitet werden. Ein Teil der vom Antriebsmotor bereitgestellten Leistung wird an den Reibelementen der Fahrkupplung in Wärme und zum geringen Teil auch in Abrieb umgesetzt, während die Drehzahl des Antriebsmotors n_mot durch diese teilweise Entkoppelung ansteigt. Gleichzeitig wird die Einspritzmenge me_soll zunächst geringfügig und im weiteren Verlauf mit zunehmender Änderungsrate abgesenkt.

Zum Zeitpunkt t₁ ist der zeitliche Überschneidungsabschnitt beendet und die Einspritzmenge me_soll auf einen im Vergleich zum Zeitpunkt t₀ geringen Wert abgesunken, während sich gleichzeitig aufgrund der sich weiter öffnenden Fahrkupplung die Drehzahl des Antriebsmotors n_mot erhöht hat. Bei sich weiter öffnender Fahrkupplung wird von der Steuerungsvorrichtung oder auch von einer entsprechend ausgelegten Getriebesteuerung ein Befehl zum Auslegen des bisherigen Ganges gegeben, der mit einer durch die Ansprechzeit der Aktuatoren bedingten Verzögerung umgesetzt wird.

In der Zeichnungsfigur ist deutlich zu erkennen, dass zu dem Zeitpunkt des Auslegens des Ganges der Wegfall des Bremsmomentes durch das automatisierte Schaltgetriebe durch die zuvor bereits erfolgte Anpassung der Einspritzmenge und des Kupplungsweges der Fahrkupplung nur noch zu einer sehr geringen Änderung der Drehzahl des Antriebsmotors n_mot führt. Weiter ist zu erkennen, dass die Drehzahl der Getriebeeingangswelle n_ge bis zu diesem Zeitpunkt nahezu konstant ist, welches der geringen Änderung der Fahrgeschwindigkeit des Fahrzeugs entspricht.

Mit dem Auslegen des Ganges erhöht sich die Drehzahl der Getriebeeingangswelle n_ge mit zunehmender Änderungsrate in Richtung der durch den Zielgang und die Fahrzeuggeschwindigkeit bedingten Synchrondrehzahl. Die schnelle Anpassung der Getriebeeingansdrehzahl n_ge ist dabei wesentlich auf den sich in Richtung einer geschlossenen Fahrkupplung verstellenden Kupplungsweg und die bereits auf nahezu Zieldrehzahl gestiegene Drehzahl des Antriebsmotors n_mot in diesem Zeitabschnitt t₁ bis t₂ der Drehzahlanpassung zurückzuführen.

Sobald die Drehzahl der Getriebeeingangswelle n_ge des automatisierten Schaltgetriebes ausreichend genau der Drehzahl des Antriebsmotors n_mot entspricht, die ihrerseits weitgehend oder zumindest ausreichend genau der sich nach Einlegen des Zielganges und vollständigem Schließen der Fahrkupplung ergebenden Drehzahl entspricht, wird kurz vor dem mit t₂ bezeichneten Zeitpunkt ein Signal zum Einlegen des Zielganges ausgegeben und wiederum mit minimaler Zeitverzögerung mit Hilfe von Aktuatoren umgesetzt. Der Gangwechsel ist damit als solches abgeschlossen.

Im Anschluss daran wird der Kupplungsweg weiter in Richtung der vollständig geschlossenen Stellung der Fahrkupplung verstellt, während gleichzeitig bereits die Soll-Einspritzmenge me_soll zunächst langsam und mit zunehmender Momentübertragungsfähigkeit der Fahrkupplung mit zunehmender Änderungsrate erhöht wird.

Zum Zeitpunkt t₃ ist der Gangwechsel schließlich auch in sofern abgeschlossen, dass die Fahrkupplung so vollständig geschlossen ist, dass sie das gesamte vom Antriebsmotor bereitgestellte Moment schlupffrei übertragen kann und die Soll-Einspritzmenge me_soll sich auf dem durch den Fahrer mittels Fahrpedal bestimmten Niveau befindet.

### Bezugszeichen

- me_soll: Soll-Einspritzmenge von Kraftstoff in den Antriebsmotor
- n_mot: Drehzahl der Ausgangswelle des Antriebsmotors
- n_ge: Drehzahl der Eingangswelle des automatisierten Schaltgetriebes
- t₀, t₁, t₂, t₃: Zeitpunkte

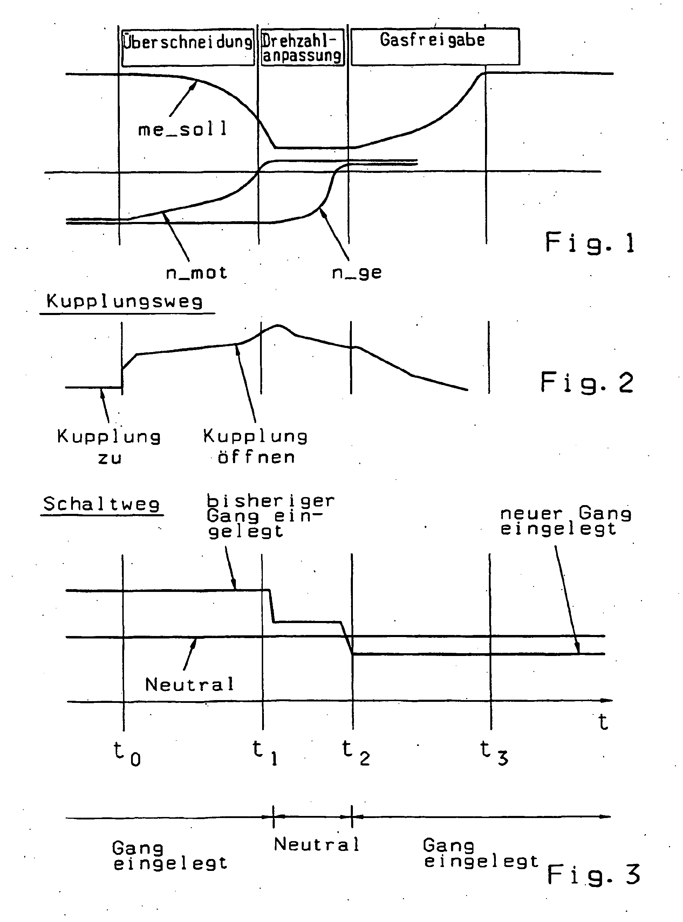

## Patentansprüche

1. Verfahren zur Steuerung eines Gangwechsels eines automatisierten Schaltgetriebes mit einem auf eine Eingangswelle des automatisierten Schaltgetriebes wirkenden Antriebsmotor und einer trieblich zwischen dem Antriebsmotor und dem automatisierten Schaltgetriebe angeordneten Fahrkupplung, welche sich durch einen Kupplungssteller wahlweise öffnen oder schließen lässt, sowie mit einer Steuerungsvorrichtung zur Koordination von automatisiertem Schaltgetriebe, Antriebsmotor und Fahrkupplung, **dadurch gekennzeichnet, dass** die Steuerungsvorrichtung bei einem Gangwechsel von einem bisherigen Gang in einen Zielgang eine Reduzierung des Antriebsmomentes (me_soll) des Antriebsmotors, eine Reduzierung des Fahrkupplungsmomentes und eine Trennung des Kraftschlusses im automatisierten Schaltgetriebe in der Art koordiniert, dass das Antriebsmoment (me_soll) des Antriebsmotors und das Fahrkupplungsmoment zeitlich überschneidend reduziert werden, wobei durch die Reduzierung des Fahrkupplungsmoments die Fahrkupplung einen Schlupfbereich erreicht und gleichzeitig mit dem Erreichen des Schlupfbereichs der Fahrkupplung das Antriebsmoment (me_soll) des Antriebsmotors reduziert wird, wobei durch den Antriebsmotor bei noch eingelegtem bisherigen Gang über die im Schlupfbetrieb befindliche Fahrkupplung ein Antriebsmoment (me_soll) an die Eingangswelle des automatisierten Schaltgetriebes übertragen wird und die Drehzahl (n_mot) des Antriebsmotors auf nahezu Zieldrebzahl angehoben wird, wobei anschließend der bisherige Gang bei sich weiter öffnender Fahrkupplung ausgelegt wird und der Antriebsmotor über die Fahrkupplung bei getrenntem Kraftschluss im automatisierten Schaltgetriebe ein Antriebsmoment (me_soll) an die Eingangswelle des automatisierten Schaltgetriebes überträgt.

2. Verfahren nach Anspruch 1, **dadurch gekennzeichnet, dass** die Steuerungsvorrichtung bei Rückschaltvorgängen die Reduzierung des Antriebsmomentes (me_soll) des Antriebsmotors, die Reduzierung des Fahrkupplungsmomentes und die Trennung des Kraftschlusses im automatisierten Schaltgetriebe in der Art koordiniert, dass der Antriebsmotor über die Fahrkupplung bei getrenntem Kraftschluss im automatisierten Schaltgetriebe ein positives Antriebsmoment (me_soll) an die Eingangswelle des automatisierten Schaltgetriebes überträgt, welches dazu beiträgt, die Eingangswelle des automatisierten Schaltgetriebes auf eine Zieldrehzahl eines einzulegenden Ganges zu beschleunigen.

3. Verfahren nach Anspruch 1, **dadurch gekennzeichnet, dass** die Steuerungsvorrichtung bei Hochschaltvorgängen die Reduzierung des Antriebsmomentes (me_soll) des Antriebsmotors, die Reduzierung des Fahrkupplungsmomentes und die Trennung des Kraftschlusses im automatisierten Schaltgetriebe in der Art koordiniert, dass der Antriebsmotor über die Fahrkupplung bei getrenntem Kraftschluss im automatisierten Schaltgetriebe ein negatives Antriebsmoment (me_soll) an die Eingangswelle des automatisierten Schaltgetriebes überträgt, welches dazu beiträgt, die Eingangswelle des automatisierten Schaltgetriebes auf eine Zieldrehzahl eines einzulegenden Ganges abzubremsen.

4. Verfahren nach wenigstens einem der Ansprüche 1 bis 3, wobei das automatisierte Schaltgetriebe ein Klauenkupplungsgetriebe ist, **dadurch gekennzeichnet, dass** die Steuerungsvorrichtung ein Signal zur Einlegung eines Zielganges abgibt, sobald die Getriebeeingangsdrehzahl (n_ge) einen schaltfähigen Abstand zur Zieldrehzahl aufweist.

5. Verfahren nach wenigstens einem der Ansprüche 1 bis 4, **dadurch gekennzeichnet, dass** der Fahrkupplungsweg bei eingelegtem Zielgang in Richtung der vollständig geschlossenen Fahrkupplung verstellt wird, während gleichzeitig das Antriebsmoment (me_soll) des Antriebsmotors zunächst langsam und mit zunehmender Momentenübertragungsfähigkeit der Fahrkupplung mit zunehmender Änderungsrate erhöht wird.

## Claims

1. Process for controlling a gearshift of an automatic gearbox having a drive engine which acts on an input shaft of the automatic gearbox and having a driving clutch which is arranged between the drive engine and the automatic gearbox and which can be selectively opened or closed by means of a clutch actuator, and having a control device for coordinating the automatic gearbox, drive engine and driving clutch, **characterized in that**, during a gearshift from a previous gear to a target gear, the control device coordinates a reduction in the drive torque (me_soll) of the drive engine, a reduction in the driving clutch torque and a separation of the power flow in the automatic gearbox in such a way that the drive torque (me_soll) of the drive engine and the driving clutch torque are reduced in an overlapping manner in terms of time, with the driving clutch moving into a slipping region as a result of the reduction in the driving clutch torque, and with the drive torque (me_soll) of the drive engine being reduced at the same time as the driving clutch moves into the slipping region, wherein, with the previous gear still engaged, the drive engine transmits a drive torque (me_soll) to the input shaft of the automatic gearbox via the driving clutch which is in the slipping mode and the rotational speed (n_mot) of the drive engine is raised to approximately the target rotational speed, wherein, while the driving clutch opens further, the previous gear is subsequently disengaged, and wherein, with the power flow in the automatic gearbox separated, the drive engine transmits a drive torque (me_soll) to the input shaft of the automatic gearbox via the driving clutch.

2. Process according to Claim 1, **characterized in that**, during downshift processes, the control device coordinates the reduction in the drive torque (me_soll) of the drive engine, the reduction in the driving clutch torque and the separation of the power flow in the automatic gearbox in such a way that, with the power flow in the automatic gearbox separated, the drive engine transmits a positive drive torque (me_soll) to the input shaft of the automatic gearbox via the driving clutch, which assists in accelerating the input shaft of the automatic gearbox to a target rotational speed of a gear to be engaged.

3. Process according to Claim 1, **characterized in that**, during upshift processes, the control device coordinates the reduction in the drive torque (me_soll) of the drive engine, the reduction in the driving clutch torque and the separation of the power flow in the automatic gearbox in such a way that, with the power flow in the automatic gearbox separated, the drive engine transmits a negative drive torque (me_soll) to the input shaft of the automatic gearbox via the driving clutch, which assists in braking the input shaft of the automatic gearbox to a target rotational speed of a gear to be engaged.

4. Process according to at least one of Claims 1 to 3, with the automatic gearbox being a claw-coupling-type gearbox, **characterized in that** the control device outputs a signal for engaging a target gear when the gearbox input rotational speed (n_ge) differs from the target rotational speed by a value which permits shifting.

5. Process according to at least one of Claims 1 to 4, **characterized in that**, with the target gear engaged, the driving clutch travel is adjusted in the direction of the driving clutch being fully closed, while at the same time, the drive torque (me_soll) of the drive engine is increased initially slowly and with an increasing rate of change as the torque-transmitting capability of the driving clutch increases.

## Revendications

1. Procédé permettant de commander un changement de rapport d'une boîte de vitesses automatisée avec un moteur d'entraînement agissant sur un arbre d'entrée de la boîte de vitesses automatisée et un embrayage de propulsion disposé de façon motrice entre le moteur d'entraînement et la boîte de vitesses automatisée, ledit embrayage pouvant être ouvert ou fermé au choix au moyen d'un régulateur d'embrayage, ainsi qu'avec un dispositif de commande permettant de coordonner la boîte de vitesses automatisée, le moteur d'entraînement et l'embrayage de propulsion, **caractérisé en ce que** le dispositif de commande coordonne une réduction du couple moteur (me_soll) du moteur d'entraînement, une réduction du couple de l'embrayage de propulsion et une séparation de l'adhérence dans la boîte de vitesses automatisée en cas de changement de rapport d'un rapport précédent dans un rapport cible de façon à ce que le couple moteur (me_soll) du moteur d'entraînement et le couple de l'embrayage de propulsion soient réduits de façon à ce qu'ils se rencontrent à un moment donné, la réduction du couple de l'embrayage de propulsion permettant à l'embrayage de propulsion d'atteindre une zone de glissement, l'atteinte de la zone de glissement de l'embrayage de propulsion permettant en même temps de réduire le couple moteur (me_soll) du moteur d'entraînement, un couple moteur (me_soll) étant transmis à l'arbre d'entrée de la boîte de vitesses automatisée par le moteur d'entraînement via l'embrayage de propulsion se trouvant en mode glissement lorsque le rapport précédent est encore passé et la vitesse de rotation (n_mot) du moteur d'entraînement étant augmentée pour atteindre quasiment la vitesse de rotation cible, le rapport précédent étant ensuite passé avec l'embrayage de propulsion s'ouvrant davantage et le moteur d'entraînement transmettant un couple moteur (me_soll) à l'arbre d'entrée de la boîte de vitesses automatisée via l'embrayage de propulsion avec une adhérence séparée dans la boîte de vitesses automatisée.

2. Procédé selon la revendication 1, **caractérisé en ce que** le dispositif de commande coordonne, en cas de rapports de rétrogradation, la réduction du couple moteur (me_soll) du moteur d'entraînement, la réduction du couple de l'embrayage de propulsion et la séparation de l'adhérence dans la boîte de vitesses automatisée de telle sorte que le moteur d'entraînement transmet un couple moteur positif (me_soll) à l'arbre d'entrée de la boîte de vitesses automatisée via l'embrayage de propulsion en cas d'adhérence séparée dans la boîte de vitesses automatisée, ladite boîte de vitesses contribuant à accélérer l'arbre d'entrée de la boîte de vitesses automatisée pour atteindre la vitesse de rotation cible d'un rapport à passer.

3. Procédé selon la revendication 1, **caractérisé en ce que** le dispositif de commande coordonne, en cas de passage à une vitesse supérieure, la réduction du couple moteur (me_soll) du moteur d'entraînement, la réduction du couple de l'embrayage de propulsion et la séparation de l'adhérence dans la boîte de vitesses automatisée de telle sorte que le moteur d'entraînement transmet un couple moteur négatif (me_soll) à l'arbre d'entrée de la boîte de vitesses automatisée via l'embrayage de propulsion en cas d'adhérence séparée dans la boîte de vitesses automatisée, ledit couple moteur contribuant à freiner l'arbre d'entrée de la boîte de vitesses automatisée pour atteindre une vitesse de rotation cible d'un rapport passé.

4. Procédé selon au moins l'une quelconque des revendications 1 à 3, la boîte de vitesses automatisée étant une boîte de vitesses à embrayage à crabots, **caractérisé en ce que** le dispositif de commande émet un signal de passage à un rapport cible dès que la vitesse de rotation d'entrée de la boîte de vitesses (n_ge) présente une interface permettant un changement de vitesse par rapport à la vitesse de rotation cible.

5. Procédé selon au moins l'une quelconque des revendications 1 à 4, **caractérisé en ce que** le chemin de l'embrayage de propulsion est décalé, lorsque le rapport cible est passé, en direction de la fermeture complète de l'embrayage de propulsion en même temps que le couple moteur (me_soll) du moteur d'entraînement est entièrement fermé, d'abord à un rythme lent puis, à mesure que la capacité de transmission du couple de l'embrayage de propulsion augmente, de plus en plus rapidement.
